# DEMANDE DE BREVET EUROPEEN

(11) **EP 0 531 198 A1**
(43) Date de publication de la demande: **10.03.1993**
(21) Numéro de dépôt: 92402375.7
(22) Date de dépôt: 01.09.1992
(51) Int. Cl.: B64D 47/06, G01S 1/70

(54) **Procédé d'évitement des collisions pour des porteurs coopératifs et ensemble optique embarqué destiné à sa mise en oeuvre**

(30) Priorité: 03.09.1991 FR 9110864
(71) Demandeur: THOMSON-CSF, 75008 Paris (FR)
(72) Inventeur: Defour, Martin, F-92045 Paris la Défense (FR)
(74) Mandataire: Lincot, Georges

(57) **Abrégé**

Procédé d'évitement des collisions pour des porteurs coopératifs, consistant :
à émettre à partir de chaque porteur (PA₁,PA₂), des ondes lumineuses impulsionnelles monochromatiques issues d'au moins deux dispositifs optiques (E₁,E₂) d'émission à grand champ pour couvrir l'espace autour du porteur et définir ainsi une zone de proximité, la puissance de l'émission optique définissant, à conditions climatiques données, la portée de l'émission et donc la zone couverte,
à recevoir, sur chaque porteur les ondes lumineuses impulsionnelles monochromatiques rayonnées par d'autres porteurs coopératifs dans l'espace, sur au moins deux dispositifs de réception (R₁,R₂) grand champ couvrant l'espace autour du porteur. Chaque intrusion d'un porteur dans la zone de proximité d'un autre provoquant la détection de rayonnement lumineux et le déclenchement d'une alarme sur l'un et l'autre porteur.

Application : Anti-collision aérienne.

## Description

L'invention se rapporte au domaine du trafic aérien et a plus particulièrement pour objet un procédé d'évitement des collisions pour des porteurs coopératifs et le dispositif destiné à être embarqué sur les porteurs coopératifs pour sa mise en oeuvre.

La nécessité pour des aéronefs de pouvoir évoluer dans des conditions de faible visibilité ou dans des zones de trafic dense rend nécessaire l'utilisation de systèmes permettant d'éviter les collisions.

Des systèmes "anti-collision" utilisant des transmissions par radio oui des ondes radars ont été développés.

Des systèmes dits "TCAS" (pour "Traffic Alert and Collision Avoidance Systems") mettent en oeuvre des interrogateurs au sol et des transpondeurs portés par des aéronefs susceptibles de répondre en fonction des interrogations, en ajoutant éventuellement à leur code de réponse des informations relatives par exemple à leur altitude. Ces systèmes, de type radar de surveillance secondaire, sont des systèmes compliqués, de coût très élevé.

D'autres types de systèmes ont été développés utilisant des procédures de communication par ondes radio et nécessitant donc des dialogues radio pour la localisation des menaces. Ces systèmes, outre leur complexité, ne permettent pas d'obtenir les réponses très rapides (quasi instantanées), qui sont indispensables en cas de risque de collision, et sont sujets pour certains aux aléas de la transmission, dans certaines conditions particulières, évanouissement, échos etc...

L'invention a pour objet un procédé d'évitement des collisions, simple et à réponse quasi instantanée, pour des porteurs coopératifs, c'est-à-dire donnant des informations à chacun des porteurs, à partir d'émissions d'ondes lumineuses monochromatiques effectuées par tous les porteurs, ces ondes lumineuses étant détectées par les porteurs entrant dans une zone de risque autour du porteur émetteur correspondant.

Selon l'invention, un procédé d'évitement des collisions pour des porteurs coopératifs, est caractérisé en ce qu'il consiste :
- à émettre à partir de chaque porteur, des ondes lumineuses impulsionnelles monochromatiques issues d'au moins deux dispositifs optiques d'émission à grand champ pour couvrir l'espace autour du porteur et définir ainsi une zone de proximité, la puissance de l'émission optique définissant, à conditions climatiques données, la portée de l'émission et donc la zone couverte,
- à recevoir, sun chaque porteur les ondes lumineuses impulsionnelles monochromatiques rayonnées par d'autres porteurs coopératifs dans l'espace, sur au moins deux dispositifs de réception grand champ couvrant l'espace autour du porteur, chaque intrusion d'un porteur dans la zone de proximité d'un autre provoquant la détection de rayonnement lumineux et le déclenchement d'une alarme sur l'un et l'autre porteur.

L'invention a également pour objet un ensemble optique destiné à être embarqué sur les porteurs, destiné à la mise en oeuvre de ce procédé d'évitement des collisions.

L'invention sera mieux comprise et d'autres caractéristiques apparaîtront à l'aide de la description qui suit en référence aux figures annexées.
- Les figures 1a et 1b sont des schémas illustrant la couverture de la zone de proximité d'un porteur dans un mode de mise en oeuvre du procédé selon l'invention ;
- La figure 2 illustre un mode de réalisation d'un dispositif d'émission placé à bord des aéronefs porteurs ;
- La figure 3 illustre un mode de réalisation du dispositif de réception placé à bord des aéronefs porteurs ;
- La figure 4 illustre le fonctionnement du système.

Comme indiqué ci-dessus, le procédé d'évitement des collisions, pour des porteurs coopératifs, utllise des moyens d'émission d'ondes lumineuses monochromatiques, impulsionnelles, embarqués sur chacun des porteurs. L'émission lumineuse est une émission grand champ permettant de couvrir toute la zone de proximité utile autour du porteur, soit dans un rayon de un à quelques kilomètres autour de l'aéronef, et au mieux dans toutes les directions. Parallèlement, le procédé utllise des moyens de réception grand champ de ces mêmes ondes lumineuses monochromatiques, embarqués sur chacun des porteurs et au mieux adaptés à la réception d'ondes lumineuses de direction quelconque provenant d'une source distante de un à plusieurs kilomètres.

Pour garantir une sécurité optimale, chaque porteur émet en permanence les ondes lumineuses impulsionnelles tout au long de sa navigation, ou au moins dès qu'il pénètre dans une zone où une surveillance doit être effectuée.

En l'absence de risque, les moyens de réception ne détectent pas le rayonnement émis par les autres mobiles. En revanche, dès que les zones de proximité de deux porteurs empiètent l'une sur l'autre, chacun d'eux détecte le rayonnement émis pan l'autre, ce qui déclenche une alarme visuelle, sonore ou autre, pour le pilote.

Pour cela, dans un mode de réalisation, chaque aéronef est équipé au moins de deux systèmes émission-réception optique, placés symétriquement de part et d'autre du porteur, chacun susceptible de couvrir 2¶ stéradians.

En pratique, du fait de la zone d'ombre créée par le volume du porteur lui-même, aussi bien pour l'émission que pour la réception, un troisième, voire un quatrième, système d'émission-réception optique pourront être nécessaires pour couvrir l'ensemble de la zone de proximité du porteur.

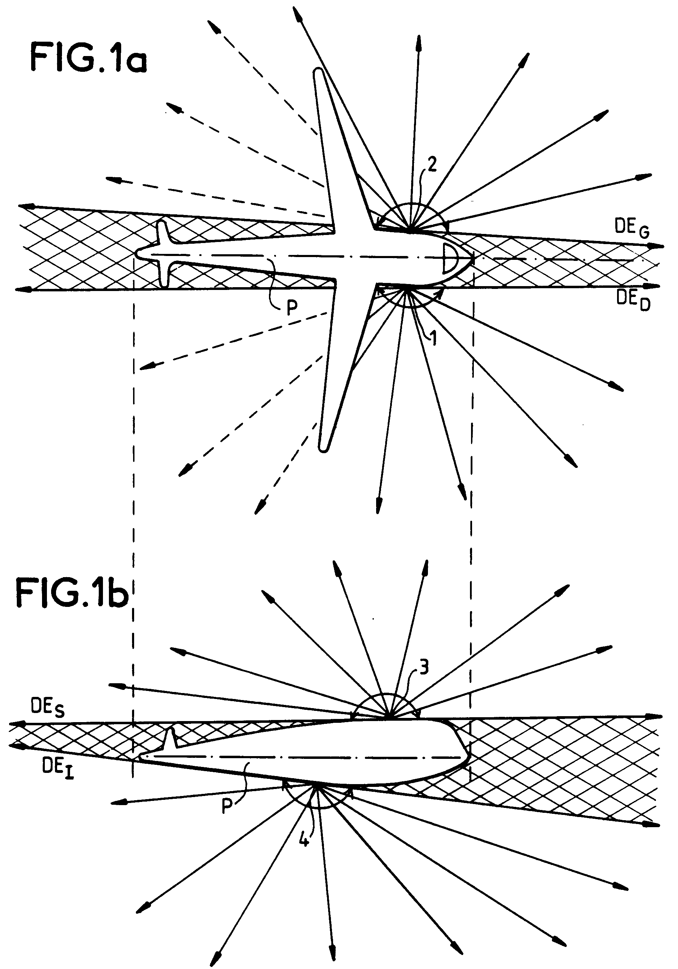

Les figures 1a et 1b illustrent comment peut être couvert pratiquement l'ensemble de la zone de proximité d'un porteur P. Sur la figure 1a qui représente en coupe le porteur dans le "plan" des ailes, deux systèmes d'émission-réception optiques 1 et 2 ont été placés symétriquement de part et d'autre du plan de symétrie du porteur P ; les axes optiques n'étant pas tout à fait parallèles les demi-espaces qu'ils couvrent DE_{D} à droite et DE_{G} à gauche se recouvrent vers l'avant mais laissent un dièdre d'ombre dont le sommet. est à faible distance devant le nez du porteur et qui s'élargit vers l'arrière. De plus les ailes créent une petite zone d'ombre dans ces demi-espaces assez peu gênante du fait du faible volume occulté et du fait que les porteurs se déplacent.

Sur la figure 1b qui représente en coupe le porteur dans son plan vertical, deux systèmes d'émission-réception optiques 3 et 4 ont été placés à proximité des points haut et bas de l'avion pour couvrir respectivement les demi-espaces supérieur DE_{S} et inférieur DE_{I}. Comme sur la figure 1a leurs axes optiques étant décalés angulairement, un dièdre d'ombre est défini dont le sommet est à faible distance de l'arrière du porteur et s'ouvre vers l'avant.

Avec des axes optiques parallèles, c'est une zone de l'espace en forme de dièdre qui n'est pas couverte par un ensemble de deux systèmes.

Suivant les types d'avions, suivant les zones possibles pour l'implantation des systèmes d'émission-réception optiques, et éventuellement en considérant d'autres critères utiles, un équipement complet pour un aéronef pourra comporter :
- seulement deux systèmes comme représenté sur l'une ou l'autre des figures 1a et 1b, avec éventuellement d'autres orientations d'axes optiques, ou éventuellement en d'autres positions notamment dans la queue de l'aéronef ;
- trois systèmes, par exemple les deux systèmes illustrés sur la figure 1a et un système complémentaire placé dans la queue de l'avion pour couvrir le cône d'ombre illustré sur la figure 1a ou les deux systèmes illustrés sur la figure 1b et un système complémentaire placé dans le nez de l'avion pour couvrir le dièdre d'ombre illustré sur la figure 1b. Une telle configuration permet une couverture complète de la zone de proximité ;
- plus de trois systèmes, et notamment 4, pour assurer une couverture complète de la zone de proximité avec une éventuelle redondance ; une configuration de ce type à plus de 3 systèmes peut également permettre de couvrir toute la zone de proximité même si le champ couvert par chaque système est inférieur à 2¶ stéradians.

En effet comme il sera expliqué ci-après chaque système émission-réception peut être de coût peu élevé.

Ainsi tout le volume entourant le porteur dans une zone dite de proximité est couvert.

Chaque système d'émission-réception optique comporte deux dispositifs, l'un pour l'émission optique l'autre pour la réception.

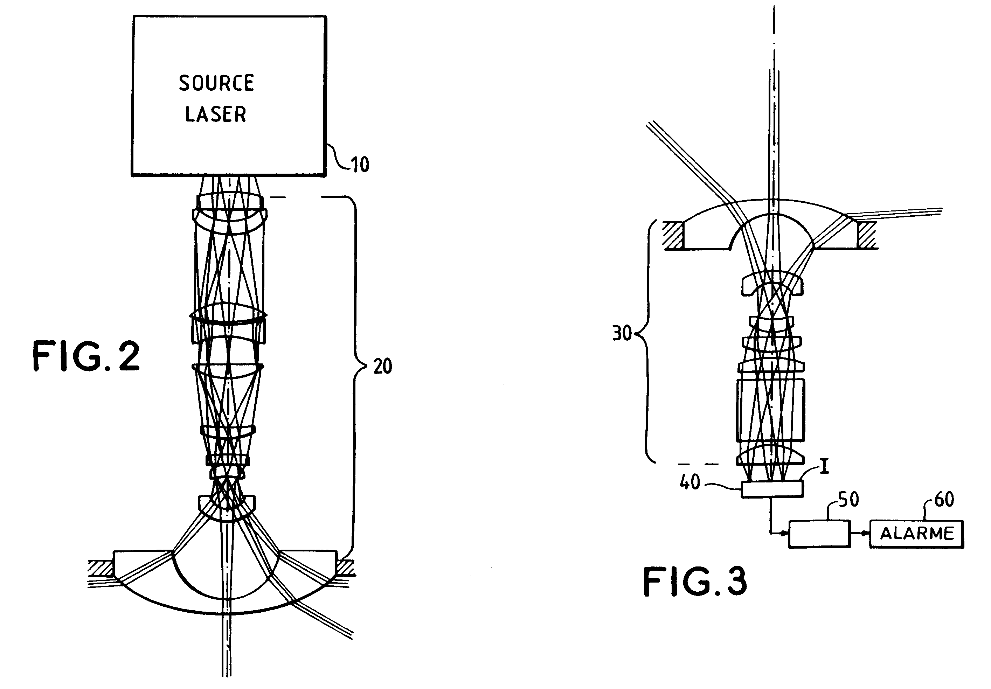

Un mode de réalisation du dispositif optique d'émission monté à bord des aéronefs est représenté en coupe sur la figure 2. Il comporte une source laser 10 de relativement forte puissance, 1 à 10MW par exemple, destinée à émettre un rayonnement impulsionnel de longueur d'onde donnée, à une cadence relativement faible, 10 Hertz par exemple. Cette source laser est associée à un dispositif optique afocal grand champ, 20, dont n'ont été représentés que la suite d'éléments optiques (sans le bâti) et qui, à partir du rayonnement parallèle ou faiblement dispersif émis par la source laser émet un flux laser dans un grand champ pouvant atteindre le demi-espace (c'est-à-dire en coupe 180° comme illustré par la figure 2). Il est possible d'utiliser comme sources laser des lasers YAG : du fait de la dispersion du rayonnement dans un demi-espace, la distance à partir de laquelle la sécurité oculaire est assurée est faible (typiquement moins du mètre). Il est également possible d'utiliser des diodes lasers car la directivité du faisceau n'est pas une contrainte, ni d'ailleurs la qualité du faisceau. A ce titre, l'objectif afocal grand champ représenté sur la figure 2 qui comporte 10 lentilles peut également être remplacé par un système optique plus simple, à la limite par une lentille divergente simple, pourvu que la répartition de la puissance lumineuse soit effectuée à peu près régulièrement dans tout le champ couvert.

L'autre dispositif optique embarqué est le dispositif de réception dont un mode de réalisation est illustré par la figure 3. Ce dispositif de réception est constitué d'un objectif de type "fish-eye", 30, qui permet de focaliser dans un plan image le rayonnement provenant d'une direction quelconque de son champ entre -90° et +90° de l'axe optique sur la figure, et ce sur une surface élémentaire dont le rayon est de l'ordre de celui des lentilles de l'optique. Un détecteur photosensible plan, 40, du type photodiode, dispositif à transfert de charge ou matrice de photodiode est placé au plan image ; la zone photosensible du détecteur est adaptée à la longueur d'onde d'émission des sources utilisées dans les dispositifs d'émission. Le signal détecté est lu et traité dans un circuit de lecture et de traitement 50, relié à une alarme 60 déclenchée lorsqu'un rayonnement, à la longueur d'onde utilisée et de niveau significatif est détecté. Les contraintes pour ce dispositif de réception est qu'il puisse recevoir dans un grand champ (demi-espace de préférence) et que le détecteur donne une image de l'ensemble de ce champ. La succession des éléments optiques représentés sur la figure 3 n'est pas limitative et le dispositif optique peut être remplacé pan un système plus simple, comportant un nombre plus réduit d'éléments.

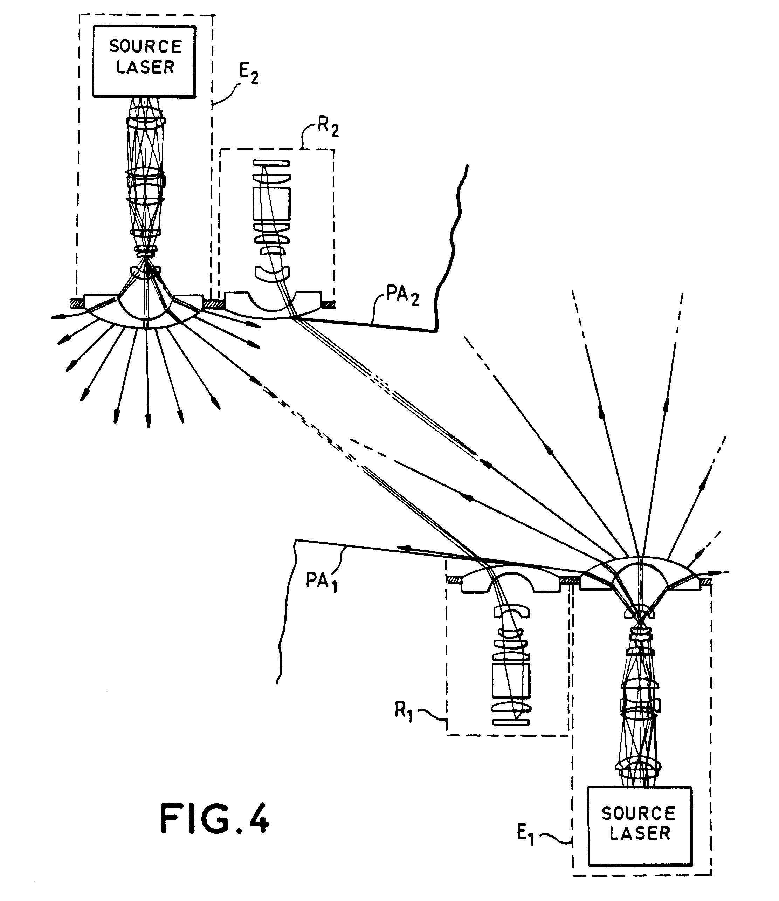

La figure 4 illustre le fonctionnement du système à partir de deux ensembles émission-réception portés chacun par un aéronef : un premier aéronef, dont on a représenté la "peau" PA₁, comporte un dispositif d'émission E₁ semblable à celui représenté sur la figure 2 et un dispositif de réception R₁ semblable à celui représenté sur la figure 3. De même un second aéronef dont on a représenté la "peau" PA₂ comporte un dispositif d'émission E₂ semblable à celui représenté sur la figure 2 et un dispositif de réception R₂ semblable à celui représenté sur la figure 3. D'autres ensembles émission-réception portés par chacun des aéronefs pour couvrir le reste du champ n'ont pas été représentés sur la figure 4.

Le système fonctionne de la manière suivante : chaque aéronef en état de veille émet, à partir des sources laser de ses dispositifs d'émission, dans l'ensemble de l'espace couvert des impulsions lumineuses à une cadence prédéterminée et délimite de cette façon une zone de proximité dont le rayon est la limite de portée des systèmes optiques. Dès qu'un autre porteur pénètre dans la zone de proximité du premier ainsi définie, son dispositif de réception captera une fraction faible du rayonnement émis par le premier. De la même manière le second porteur, qui vient d'entrer dans la zone de proximité du premier, émet lui aussi en impulsions à partir de chaque source laser dans la zone de proximité définie autour de lui. Une fraction du rayonnement émis par le second porteur sera captée par le dispositif de réception R₁ ponté par le premier. La réception respectivement par les dispositifs R₁ et R₂ déclenche une alarme tant à bord du premier porteur qu'à bord du second. Le caractère matriciel du senseur 40 des dispositifs de réception permet également à chacun des porteurs de localiser la direction du porteur qui vient d'entrer dans sa zone de proximité. La phase de veille est alors terminée et les porteurs peuvent entrer dans une phase active visant à écarter la menace par des modifications de trajectoire.

Pour cela les dispositifs d'émission peuvent être complétés par des dispositifs de modulation et une chronométrie peut être mise en oeuvre pour déduire des temps d'émission-réception la distance de la menace.

Dans un mode de réalisation particulier, les dispositifs d'émission ont été constitués de la manière suivante :
- une source laser de puissance 1,3 MW à une cadence de 10 Hertz ;
- un objectif afocal grand champ de grandissement égal à 5.

Si la dispersion du faisceau à la sortie de la source est de l'ordre de 18 °, il est alors possible de couvrir par un tel dispositif d'émission un demi-espace (2¶ stéradians).

Toujours dans un mode de réalisation particulier, le dispositif de réception a les caractéristiques suivantes :
- la pupille de réception est de l'ordre de 3mm ;
- le détecteur est une matrice de photodiodes PIN avec un filtre interférentiel dont la sensibilité est évaluée à 10⁻⁷ watts.

Pour un tel exemple, si l'on considère que la transmission optique du système est de l'ordre de 0,8 et que la transmission atmosphérique est par beau temps de l'ordre de 0,8 pour un kilomètre et par mauvais temps de l'ordre de 0,1 pour un kilomètre (ce qui correspond à des conditions climatiques extrêmement défavorables), le système ainsi constitué peut avoir une portée par beau temps de 2,5 kilomètres et par mauvais temps de 1 kilomètre. De plus tout l'espace est scruté en 0,1 seconde, puisque, et c'est là un intérêt majeur du procédé selon l'invention, aucun balayage n'est nécessaire, ni aucune procédure d'interrogation réponse qui nécessiterait des échanges de messages.

Comme indiqué ci-dessus, l'invention n'est pas limitée aux modes de réalisation précisément décrits et illustrés. En particulier les dispositifs optiques peuvent être simplifiés pourvu que le dispositif d'émission soit un dispositif d'émission grand champ et que le dispositif de réception permette de détecter également dans un grand champ.

De plus, dans la description qui précède on a supposé que les champs couverts en émission et en réception étaient les mêmes et c'est pourquoi un dispositif de réception a été supposé "couplé" à chacun des dispositifs d'émission. Cette disposition n'est évidemment pas limitative et l'implantation des dispositifs d'émission et des dispositifs de réception de manière indépendante est évidemment possible car il n'y a pas de couplage nécessaire entre les deux, la seule condition étant que, pour l'émission comme pour la réception, le champ couvert soit l'ensemble de l'espace autour du porteur.

Enfin, une émission à puissance constante conduit à une variation de la portée en fonction des conditions climatiques. Il est possible de prévoir des lasers à puissance réglable pour augmenter la puissance d'émission en cas de conditions climatiques diminuant la transmission optique dans l'atmosphère.

## Revendications

1. Procédé d'évitement des collisions pour des porteurs coopératifs, caractérisé en ce qu'il consiste :
- à émettre à partir de chaque porteur, des ondes lumineuses impulsionnelles monochromatiques issues d'au moins deux dispositifs optiques d'émission à grand champ pour couvrir simultanément tout l'espace autour du porteur et définir ainsi une zone de proximité, la puissance de l'émission optique définissant, à conditions climatiques données, la portée de l'émission et donc la zone couverte,
- à recevoir, sur chaque porteur les ondes lumineuses impulsionnelles monochromatiques rayonnées par d'autres porteurs coopératifs dans l'espace, sur au moins deux dispositifs de réception grand champ couvrant tout l'espace autour du porteur, chaque intrusion d'un porteur dans la zone de proximité d'un autre provoquant la détection de rayonnement lumineux et le déclenchement d'une alarme sur l'un et l'autre porteur.

2. Procédé selon la revendication 1, caractérisé en ce que l'émission est une émission laser de puissance comprise entre 1 et plusieurs mégawatts.

3. Ensemble optique destiné à être embarqué sur un porteur coopératif, pour la mise en oeuvre du procédé d'évitement des collisions selon l'une des revendications 1 et 2, caractérisé en ce qu'il comporte :
- des moyens d'émission optique pour couvrir l'espace autour du porteur comportant n dispositifs optiques d'émission grand champ, n supérieur ou égal à 2, disposés sur le porteur pour qu'un rayonnement soit émis pratiquement dans toutes les directions de l'espace, n étant d'autant plus faible que le champ couvert par chaque dispositif d'émission est grand,
- des moyens de réception optique comportant p dispositifs optiques de réception grand champ, p supérieur ou égal à 2, disposés sur le porteur pour qu'un rayonnement en provenance d'une direction quelconque de l'espace soit détecté, p étant d'autant plus faible que le champ couvert par chaque dispositif optique de réception est grand.

4. Ensemble optique selon la revendication 3, caractérisé en ce que chaque dispositif d'émission comporte une source laser (10), et un dispositif optique afocal grand champ (20).

5. Ensemble optique selon la revendication 4, caractérisé en ce que la source (10) est un laser YAG de puissance comprise entre 1 et une dizaine de mégawatts.

6. Ensemble optique selon la revendication 3, caractérisé en ce que chaque dispositif de réception comporte un objectif de type "fish-eye" (30), formant dans un plan image (I), une image d'un dispositif d'émission émettant dans le champ couvert par l'objectif, et un détecteur photosensible (40) placé au plan image (I) de l'objectif (30), associé à un circuit de lecture et de traitement (50) du signal détecté, lui même couplé à une alarme (60).

7. Ensemble optique selon la revendication 6, caractérisé en ce que le détecteur (40) est un détecteur plan, la position d'une image détectée dans ce plan donnant la direction de l'émission reçue, et donc la direction par rapport au porteur de la menace détectée.
